# EUROPÄISCHE PATENTSCHRIFT

(11) **EP 0 635 792 B1**
(45) Veröffentlichungstag und Bekanntmachung des Hinweises auf die Patenterteilung: **27.08.2003**
(21) Anmeldenummer: 94110108.1
(22) Anmeldetag: 29.06.1994
(51) Int. Cl.: G06F 15/16, G06F 9/46

(54) **Verfahren zur Koordination von parallelen Zugriffen mehrerer Prozessoren auf Resourcenkonfigurationen**
Coordination method for parallel access to resource configurations by a plurality of processors
Méthode de coordination d'accès parallèles de plusieurs processeurs aux configurations des ressources

(30) Priorität: 16.07.1993 DE 4323931
(43) Veröffentlichungstag der Anmeldung: 25.01.1995
(73) Patentinhaber: SIEMENS AKTIENGESELLSCHAFT, 80333 München (DE)
(72) Erfinder: Liebl, Robert, D-93470 Thürnstein/Lohberg (DE); Pfaehler, Wolfgang, Dipl.-Phys., D-85221 Dachau (DE)

(56) Entgegenhaltungen:
- EP-A- 0 164 578
- EP-A- 0 380 857
- PER BRINCH HANSEN: 'Operating System Principles' 1973 , PRENTICE-HALL, INC. , ISBN 0-13-637843-9, ENGLEWOOD CLIFFS, NEW JERSEY Seiten 42-53, 122-131 * Seite 124, Zeile 32 - Zeile 38 * * Seite 125, Zeile 18 - Zeile 23 *
- ELEKTRONISCHE RECHENANLAGEN, Bd. 26, Nr. 1, Februar 1984 ISSN 0013-5720, MÜNCHEN, DEUTSCHLAND, Seiten 3-12, D. ZÖBEL: 'Ein geschlossenes Konzept zur effizienten Behandlung der Deadlockproblematik in Betriebssystemen'
- A.M. LISTER: 'Fundamentals of Operating Systems' 1979 , THE MACMILLAN PRESS LTD. , ISBN 0-333-27287-0, LONDON AND BASINGSTOKE Seiten 94-99 * Seite 95, Zeile 7 - Zeile 12 * * Seite 99, Zeile 14 - Zeile 25 *

## Beschreibung

Verfahren zur Koordination von parallelen Zugriffen mehrerer Prozessoren auf Resourcenkonfigurationen

In Multiprozessor-Rechnersystemen existieren oft komplexe Relationen zwischen unterschiedlichen Systemresourcen. Diese Systemresourcen sind nicht immer vom selben logischen Typ und sind auch nicht immer durch einfache Index- oder Zeigerverweise miteinander verknüpft. Der Bezug zwischen den Resourcen ergibt sich vielmehr erst dynamisch im Lauf einer Anreizverarbeitung. Insbesondere kann sich der Bezug erst ergeben, nachdem Teile einer solchen Resourcenkonfiguration bereits datentechnisch manipuliert wurden.

Als Beispiel eines Multiprozessor-Rechnersystems kann ein speicherprogrammiertes Vermittlungssystem betrachtet werden, das als Resourcen z.B. Kanalregister und Transaktionskontrollblöcke enthält. Kanalregister repräsentieren dabei das Abbild eines physikalischen Weges durch das Vermittlungssystem (Gesprächsdaten), während Transaktionskontrollblöcke die logischen Abbilder von gesprächslosen Aktionen repräsentieren. Verknüpfungen kann es nun sowohl zwischen mehreren Kanalregistern bzw. mehreren Transaktionskontrollblöcken, als auch zwischen Kanalregistern und Transaktionsblöcken geben. Im Mobilfunk sind logische Verknüpfungen von bis zu vier Kanalregistern mit bis zu 42 Transaktionskontrollblöcken gleichzeitig bekannt.

Die Vergabe von Ressourcen und die Koordination von parallelen Zugriffen auf Ressourcen wird z.B. in Per Brinch Hansen: Operating System Principles beschrieben.

Der Erfindung liegt die Aufgabe zu Grunde, in einer Multiprozessorumgebung konkurierende (lesend und schreibend) Zugriffe auf Resourcenkonfigurationen konsistent vorzunehmen und gegenseitig zu koordinieren.

Diese Aufgabe wird durch die Verfahrensschritte des Anspruches 1 gelöst.

Durch die zentrale Vergabe der Kontrolle über eine Resourcenkonfiguration an einen Prozessor aufgrund eines Anreizes (Meldung) werden Zugriffe weiterer Prozessoren auf die Resourcenkonfiguration während der gesamten Meldungsbearbeitung durch den einen Prozessor vermieden. Dadurch werden inkonsistente Zugriffe auf die Resourcenkonfiguration vermieden.

Eine weitere Ausgestaltung der Erfindung ist durch Anspruch 2 angegeben. Diese Ausgestaltung besitzt insbesondere den Vor teil, daß eine meldungsindividuelle Anwenderinstanz keine Kenntnis vom eigentlichen Sicherungsvorgang benötigt.

Eine weitere Ausgestaltung der Erfindung ist durch Anspruch 3 angegeben. Bei dieser Ausgestaltung entsteht aufgrund der zyklischen Vergabe der Sicherungsnummern kein Verlust an Dynamik, da kein extra Schutzmechanismus für eine komplexere Sicherungsnummernverwaltung (Zeigerverwaltung) benötigt wird.

Im folgenden wird die Erfindung an Hand der Zeichnungen näher erläutert.

Die Realisierung des erfindungsgemäßen Verfahrens basiert auf einer zentralen Sicherungstabelle, über die Sicherungsnummern vergeben werden, wobei pro Resourcenkonfiguration jeweils nur eine einzige Sicherungsnummer vergeben wird.

Bevor ein Prozessor auf eine mittels einer Sicherungsnummer gekennzeichnete Resource zugreift, versucht er vor dem Zugriff seine Prozessornummer in der zentralen Sicherungstabelle zu hinterlegen. Gelingt es ihm seine Prozessornummer zu hinterlegen, so hat er damit die vollständige Kontrolle über alle mittels derselben Sicherungsnummer gekennzeichneten Resourcen erhalten.

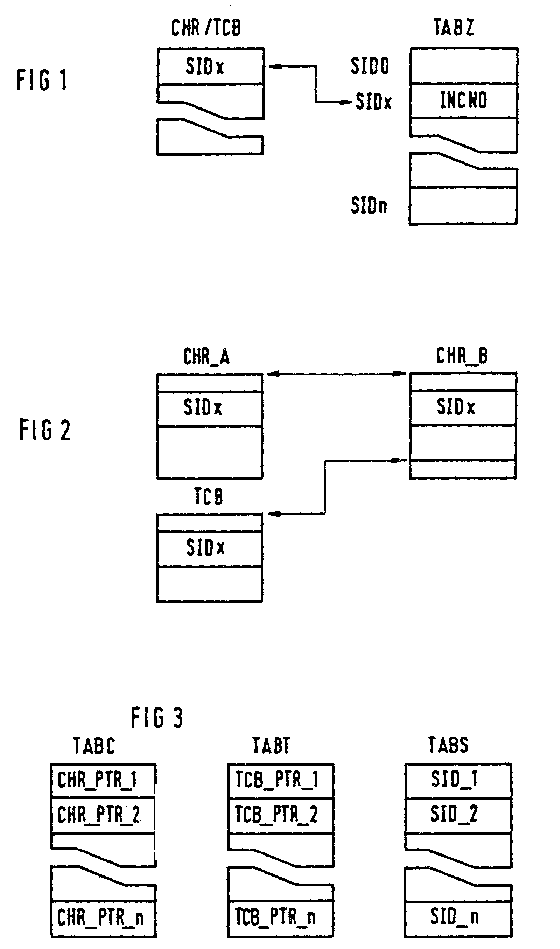

Fig. 1 zeigt die Vergabe einer Sicherungsnummer SIDx einer zentralen Sicherungstabelle TABZ an eine Resource CHR/TCB, bei der es sich z.B. um ein Kanalregister CHR oder um einen Transaktionskontrollblock TCB handeln kann. Wird zu Beginn einer Verbindung bzw. Transaktion durch den Anwender (Anwenderprogrammsystem) eine Resource aus dem Freiband (Resourcenpool) belegt, muß zuerst eine Sicherungsnummer vergeben und vom Prozessor des Anwenders durch Hinterlegung einer Inkarnationsnummer INCNO des Anwenders gesichert werden, bevor diese Sicherungsnummer in der belegten Resource eingetragen werden kann. Gleichzeitig wird sie auch in die prozessorspezifische Tabelle an erster Stelle eingetragen und wird somit zur sog. aktuellen Sicherungsnummer. Werden nun weitere Resourcen zugeschaltet, wird die aktuelle Sicherungsnummer entsprechend weiterverwendet. Dadurch besitzen alle logisch verknüpften Resourcen eine gemeinsame Sicherungsnummer und es lassen sich somit auch umfangreichere Resourcenkonfigurationen (siehe Fig. 2) mit nur einem Eintrag in der Sicherungstabelle vor unerlaubten Zugriffen sichern.

Die Inkarnationsnummer des Anwenders entspricht der Prozessornummer, wenn das Anwenderprogrammsystem eines Prozessors nur durch eine einzige Inkarnation, d.h. einen einzigen vom Betriebssystem verwalteten Prozeß realisiert ist. Im folgenden wird deshalb anstelle des Begriffs "Inkarnationsnummer" auch der Begriff "Prozessornummer" gleichbedeutend verwendet.

Fig. 2 zeigt die Sicherung einer Resourcenkonfiguration durch eine gemeinsame Sicherungsnummer.

Die Vergabe der Sicherungsnummern erfolgt zyklisch. Wird also eine Sicherungsnummer aus der Sicherungstabelle vergeben, stellt man den Zeiger auf den nächsten Tabellenplatz. Ist man am Ende der Tabelle angelangt, wird der Zeiger wieder auf den Tabellenanfang gestellt. Mit der zugeteilten Sicherungsnummer wird im entsprechenden Tabellenplatz der Sicherungstabelle versucht, mit einem speziellen Befehl die Inkarnationsnummer des Prozessors einzutragen. Ist bezüglich dieser Sicherungsnummer bereits eine andere Inkarnationsnummer eingetragen und damit diese Sicherungsnummer gesichert (belegt), vergibt die Zeigerverwaltung einfach die nächste Sicherungsnummer der Sicherungstabelle und versucht sodann diese zu sichern. Mit der zyklischen Vergabe ist für die Zeigerverwaltung kein besonderer Schutzmechanismus und damit auch kein besonderer Dynamikaufwand notwendig.

Durch die zyklische Vergabe besteht die Möglichkeit, daß dieselbe Sicherungsnummer mehrmals und damit für voneinander unabhängige Verbindungen bzw. Transaktionen vergeben wird. Dies hat aber nur geringe Nachteile. Anreize für diese verschiedenen Resourcenkonfigurationen mit derselben Sicherungsnummer würden dann nicht parallel sondern aufgrund der zu einem bestimmten Zeitpunkt jeweils nur von einem einzigen Anwender sicherbaren (belegbaren) Sicherungsnummer sequenziell bearbeitet werden. Diese Fälle können durch eine entsprechend dimensionierte Tabelle vernachläßigbar gering gehalten werden.

Werden bestehende Resourcenkonfigurationen, die erfindungsgemäß jeweils eine eigene Sicherungsnummer besitzen, logisch miteinander verknüpft, müssen nach der Verknüpfung alle Resourcen die gleiche Sicherungsnummer haben. Dazu wird die Sicherungsnummer an den betreffenden Stellen entsprechend umgeschrieben. Zu diesem Zeitpunkt müssen selbstverständlich alle beteiligten Sicherungsnummern von demselben Prozessor gesichert sein, d.h. die Inkarnationsnummer des Prozessors muß bezüglich der alten Sicherungsnummern und der neuen Sicherungsnummer in der Sicherungstabelle eingetragen sein.

Ein Prozessor versucht seine Inkarnationsnummer immer dann in der Sicherungstabelle einzutragen, sobald er aus einer ihm zugeteilten Nachricht die damit verknüpfte Resource und damit auch die Sicherungsnummer ermitteln kann. Beendet der Prozessor die Bearbeitung, wird die Inkarnationsnummer aus der Sicherungstabelle wieder ausgetragen. Dazu merkt sich jeder Prozessor in einer Tabelle seines lokalen Speichers alle Sicherungsnummern, die von ihm im Rahmen einer Meldungsbearbeitung gesichert worden sind, um sie am Ende der Bearbeitung von einer zentralen Dienstinstanz des Anwenders, z.B. einer zentralen Prozedur wieder entsichern zu lassen.

Eine Sicherungsnummer bleibt in einer Resource während deren gesamten transienten Lebensdauer gültig. Wird die Resource wieder freigegeben, d.h. für die Verbindung nicht mehr benötigt, kann auch gleichzeitig die Sicherungsnummer aus dieser Resource ausgetragen werden.

Fig. 3 zeigt die prozessorspezifischen Tabellen zur Realisierung des erfindungsgemäßen Verfahrens, die jeweils im lokalen Speicher eines Prozessors vorhanden sind, nämlich eine lokale Sicherungsnummerntabelle TABS, die in der von einem Prozessor gesicherten Sicherungsnummern eingetragen sind, sowie Resourcentabellen TABC und TABT, in denen Zeiger CHR_PTR und TCB_PTR auf von diesem Prozessor gesicherte Resourcen enthalten sind.

Im folgenden wird die Arbeitsweise der zentralen Prozeduren zum Sichern und Entsichern der Resourcen näher beschrieben.

Im Zuge einer Meldungsbearbeitung will eine Anwenderinstanz auf ein Kanalregister CHR zugreifen und ruft zu diesem Zweck die Sicherungsprozedur zum Sichern von Kanalregistern auf. Bei ihrem Aufruf übergibt die Anwenderinstanz der Sicherungsprozedur einen Index auf das angeforderte Kanalregister, wobei die Anwenderinstanz den Index aus der empfangenen Meldung entnommen hat. Anhand dieses Indexes prüft die Sicherungsprozedur, ob das angeforderte Kanalregister im Zustand "Kanal belegt" oder "Kanal frei" ist.

Ist das Kanalregister im Zustand "Kanal belegt", so entnimmt die Sicherungsprozedur aus dem Kanalregister dessen zugehörige Sicherungsnummer. Unter dieser Sicherungsnummer versucht die Sicherungsprozedur sodann in der zentralen Sicherungstabelle die Inkarnationsnummer der Anwenderinstanz einzutragen. Gelingt dies, so erhält die Anwenderinstanz den Rückgabeparameter "Erfolg" sowie einen physikalischen Zeiger auf das angeforderte Kanalregister. Durch die erfolgreiche Hinterlegung hat die Anwenderinstanz gleichzeitig die Kontrolle über die gesamte zu der Sicherungsnummer des angeforderten Kanalregisters gehörige Resourcenkonfiguration erhalten.

Ist das Kanalregister CHR im Zustand "Kanal frei", trägt die Sicherungsprozedur nach Anforderung von der Zeigerverwaltung eine neue Sicherungsnummer bzw. falls in der lokalen Sicherungsnummerntabelle TABS bereits vorhanden, die aktuelle Sicherungsnummer im Kanalregister ein. Bei der aktuellen Sicherungsnummer handelt es sich um die an erster Stelle in der lokalen Sicherungsnummerntabelle eingetragene Sicherungsnummer SID_1.

Hat das Kanalregister einen Verweis auf einen Partner mit derselben Sicherungsnummer, gibt die Sicherungsprozedur beide Pointer an die aufrufende Anwenderinstanz zurück. Sind sie unterschiedlich, wird der Aufruf mit einem entsprechenden Rückgabeparameter abgewiesen.

Die beschriebene Arbeitsweise der Sicherungsprozedur zum Sichern von Kanalregistern gilt analog auch für die Sicherungsprozedur zum Sichern von Transaktionskontrollblöcken.

Die Entsicherungsprozedur wird am Ende einer Meldungsbearbeitung von einer zentralen Dienstinstanz des Anwenders aufgerufen. Die Entsicherungsprozedur arbeitet mit Hilfe der in Fig. 3 dargestellten Kanalregistertabelle TABC, in der alle Zeiger auf Kanalregister, die im Laufe einer Meldungsbearbeitung einer Anwenderinstanz geliefert wurden eingetragen sind. Alle zu dieser Kanalzeigertabelle zugehörigen Kanalregister werden von der Entsicherungsprozedur auf den Zustand "Kanal frei" geprüft. Durch Eintragen dieses Zustandes in ein Kanalregister legt eine Anwenderinstanz fest, ob das Kanalregister an dieser Stelle freigegeben werden kann. Trifft dies zu, wird das Kanalregister an dieser Stelle durch Aufruf der entsprechenden Routine ins Freiband gehängt.

Die beschriebene Entsicherungsprozedur wird analog zu den Kanalregistern auch für die Transaktionskontrollblöcke übernommen. Das bedeutet, daß die genannte Entsicherungsprozedur außer der genannten Kanalzeigertabelle auch eine Transaktionszeigertabelle TABT entsprechend bearbeitet.

In der lokalen Sicherungsnummerntabelle werden diejenigen Sicherungsnummern gespeichert, die im Laufe einer Meldungsbearbeitung von einem Prozessor gesichert worden sind. Mit Hilfe dieser Tabelle werden nach Abschluß der Meldungsbearbeitung alle entsprechenden Sicherungsnummern in der zentralen Sicherungstabelle wiederum entsichert und damit für eine erneute Sicherung durch andere Prozessoren freigegeben.

Durch die beschriebene Arbeitsweise der Sicherungsprozeduren merkt die meldungsindividuelle Anwenderinstanz so gut wie nichts vom eigentlichen Sicherungsvorgang. Auch der Vorgang des Entsicherns nach der Meldungsbearbeitung wird von einer zentralen Dienstinstanz des Anwenders abgewickelt.

Im folgenden werden noch einmal die wichtigsten Abläufe bzw. Definitionen des beschriebenen Koordinierungsverfahrens zusammengefaßt.

Eine Anwenderinstanz erhält den Zeiger auf eine Resource von der Sicherungsprozedur nur dann, wenn die Resource eine Sicherungsnummer enthält und diese Sicherungsnummer ordnungsgemäß durch Hinterlegung der Prozessornummer gesichert worden ist.

Neue Sicherungsnummern werden zyklisch vergeben, d.h. es darf durchaus vorkommen, daß zwei voneinander unabhängige Resourcenkonfigurationen die gleiche Sicherungsnummer haben.

Die erste Sicherungsnummer, die von einem Prozessor gesichert wird heißt "aktuelle Sicherungsnummer".

Bei der Neubelegung einer Resource wird die aktuelle Sicherungsnummer eingetragen. Nur falls noch keine vorhanden ist, wird eine neue Sicherungsnummer vergeben, die dann zur neuen aktuellen Sicherungsnummer wird und in die neu belegte Resource eingetragen wird.

Alle Sicherungsnummern SID_1, ..., SIDn, die im Laufe einer Meldungsbearbeitung gesichert worden sind, sind in der lokalen prozessorspezifischen Sicherungsnummerntabelle TABS eingetragen. An erster Stelle in dieser Tabelle steht wie bereits erwähnt die aktuelle Sicherungsnummer. Diese aktuelle Sicherungsnummer wird bei jedem Aufruf einer Anwenderinstanz an eine zentrale Dienstinstanz (z.B. Sicherungsprozedur, Entsicherungsprozedur, Verknüpfungsprozedur) mitübergeben.

Werden zwei Resourcenkonfigurationen miteinander verknüpft, müssen nach der Verknüpfung alle Resourcen die gleiche Sicherungsnummer haben. Dies wird durch den Aufruf einer zentralen Dienstinstanz, nämlich der obengenannten Verknüpfungsprozedur gewährleistet.

Alle Zeiger auf Kanalregister bzw. Transaktionskontrollblöcke, die den Anwenderinstanzen über die Sicherungsprozeduren im Laufe einer Meldungsbearbeitung weitergegeben werden, sind in der Kanalzeigertabelle bzw. Transaktionszeigertabelle eingetragen.

Eine Anwenderinstanz signalisiert durch Eintragen des Zustandes "frei", daß diese Resource freigegeben werden kann. Das Einfädeln der freigegebenen Resource ins Freiband, sowie das Entsichern der Sicherungsnummer in der zentralen Sicherungstabelle TABZ erfolgt ebenfalls mit einer zentralen Dienstinstanz, nämlich der Entsicherungsprozedur.

Alle Sicherungsnummern, die im Laufe einer Meldungsbearbeitung gesichert worden sind, werden zentral mit der Entsicherungsprozedur entsichert.

Werden beim Sichern von Resourcen Inkonsistenzen bei der Verknüpfung der Resourcen oder den Sicherungsnummern festgestellt, werden diese so weit wie möglich durch die Sicherungsprozedur korrigiert.

## Patentansprüche

1. Verfahren zur Bearbeitung von Verbindungen bzw. Transaktionen durch mehrere Anwenderinstanzen, demgemäß
a) zu einer Verbindung bzw. Transaktion jeweils eine Sicherungsnummer vergeben wird, die zu jeder für die Verbindung bzw. Transaktion belegten Ressource mitabgespeichert wird,
b) vor dem Zugriff einer Anwenderinstanz auf eine belegte Ressource die zu dieser Ressource mitabgespeicherte Sicherungsnummer entnommen wird und in einem zentralen Speichermittel versucht wird, zu dieser Sicherungsnummer die Inkarnationsnummer der Anwenderinstanz zu hinterlegen,
c) ein Zugriffsversuch einer Anwenderinstanz auf eine belegte Ressource abgewiesen wird, wenn bei dem Versuch der Hinterlegung festgestellt wird, daß zu dieser Sicherungsnummer bereits die Inkarnationsnummer einer anderen Anwenderinstanz hinterlegt ist.

2. Verfahren nach Anspruch 1,
**dadurch gekennzeichnet,**
**daß** das zentrale Speichermittel als Tabelle realisiert wird, wobei die Inkarnationsnummer der Anwenderinstanz unter demjenigen Tabelleplatz hinterlegt wird, der der Sicherungsnummer entspricht.

3. Verfahren nach Anspruch 1 oder 2,
**dadurch gekennzeichnet,**
**daß** die vorhandenen Sicherungsnummern (SID) zyklisch vergeben werden.

## Claims

1. Method for a plurality of user instances to edit connections or transactions, according to which
a) every connection or transaction is allocated a respective security number which is concomitantly stored for every resource used for the connection or transaction,
b) a user instance's access to a used resource is preceded by the security number concomitantly stored for this resource being withdrawn and a central storage means attempting to store the user instance's incarnation number for this security number,
c) any attempt by a user instance to access a used resource is rejected if, during the attempt at storage, it is established that another user instance's incarnation number is already stored for this security number.

2. Method according to Claim 1,
**characterized**
**in that** the central storage means is in the form of a table, with the user instance's incarnation number being stored at that table location which corresponds to the security number.

3. Method according to Claim 1 or 2,
**characterized**
**in that** the security numbers (SID) provided are allocated cyclically.

## Revendications

1. Procédé pour traiter des liaisons resp. transactions par plusieurs instanciations, selon lequel
a) on attribue à une liaison resp. transaction un identifiant de sécurité respectif qui est mémorisé en relation avec chaque ressource occupée pour la liaison resp. transaction,
b) avant qu'une instanciation accède à une ressource occupée, on retire l'identifiant de sécurité mémorisé en relation avec cette ressource et on essaie de déposer, dans un moyen d'enregistrement central, le numéro de l'instanciation en relation avec cet identifiant de sécurité,
c) une tentative d'accès d'une instanciation à une ressource occupée est rejetée lorsqu'il est établi, lors de la tentative de dépôt, que le numéro d'une autre instanciation est déjà déposé en relation avec l'identifiant de sécurité.

2. Procédé selon la revendication 1, **caractérisé en ce que** le moyen d'enregistrement central est réalisé en tant que table, le numéro de l'instanciation étant déposé sous l'emplacement de la table qui correspond à l'identifiant de sécurité.

3. Procédé selon la revendication 1 ou 2 , **caractérisé en ce que** les identifiants de sécurité (SID) existants sont attribués de manière cyclique.
